# FASCICULE DE BREVET EUROPEEN

(11) **EP 0 716 426 B1**
(45) Date de publication et mention de la délivrance du brevet: **22.07.1998**
(21) Numéro de dépôt: 95402471.7
(22) Date de dépôt: 06.11.1995
(51) Int. Cl.: H01B 19/00, H01B 17/32

(54) **Procédé de fabrication d'un isolateur électrique**
Verfahren zur Herstellung eines elektrischen Isolators
Process of manufacturing an electrical insulator

(30) Priorité: 07.11.1994 FR 9413317
(43) Date de publication de la demande: 12.06.1996
(73) Titulaire: SEDIVER, SOCIETE EUROPEENNE D'ISOLATEURS EN VERRE ET COMPOSITE, F-92017 Nanterre Cédex (FR)
(72) Inventeur: Levillain, Roger, F-03270 St Yorre (FR); Bourdier, Gilles, F-63310 Randan (FR)
(74) Mandataire: Prugneau, Philippe

(56) Documents cités:
- CH-A- 659 907
- US-A- 4 661 184

## Description

L'invention concerne un procédé de fabrication d'un isolateur électrique utilisé, par exemple, dans des installations à haute tension, comme support d'appareillages ou de conducteurs, comme enveloppe d'appareillages ou de traversées.

Un isolateur électrique du genre indiqué ci-dessus et son procédé de fabrication sont connus du document CH-A-653907. Un tel isolateur est fabriqué à partir d'un support en matériau stratifié et d'une bande continue en matière élastomère.

Le support a généralement une surface extérieure de forme cylindrique, tronconique, bitronconique, en "tonneau" ou toute autre forme de révolution. Le support est fabriqué, par exemple, par un enroulement de fibres ou fils minéraux ou organiques, comme les fibres de verre, agglomérées par une résine synthétique durcissable comprenant la résine époxyde.

La bande continue est obtenue par extrusion. Elle est profilée de façon à présenter en section une surface de base servant de surface de contact avec la surface extérieure du support, une face supérieure munie d'au moins une ailette s'étendant transversalement à la surface de base, une première et une seconde surface latérale qui prolongent la surface de base en faisant avec celle-ci un certain angle.

Pour fabriquer l'isolateur électrique, on enroule la bande profilée en plusieurs spires successives jointives autour du support en appliquant la surface de base de la bande sur la surface extérieure du support. Lorsqu'elle est enroulée en plusieurs spires, la bande forme une pluralité d'ailettes annulaires isolantes qui saillent à partir du support.

En raison de son degré de résistance supérieur et de son poids inférieur, ce type d'isolateur remplace progressivement les isolateurs traditionnels fabriqués en porcelaine.

Selon ce procédé de fabrication connu du document cité ci-dessus, on amène la première surface latérale de la bande en contact par juxtaposition avec la seconde surface latérale de la bande lors de l'enroulement en spires jointives de cette bande. Mais il est prévu d'assembler ces deux surfaces par collage en utilisant notamment une colle à deux composants "Araldite". En particulier, les deux surfaces latérales de la bande profilée sont préalablement encollées et la bande est ensuite enroulée en hélice autour du support. Il s'avère que le dépôt de colle sur ces deux surfaces latérales est une opération très délicate en raison du type de colle utilisée. De plus, il s'avère très difficile d'enduire de façon uniforme ces deux surfaces avec la colle indiquée ci-dessus tout en extrudant la bande profilée et en l'enroulant autour du support. Il en résulte que ces deux surfaces latérales ne sont pas toujours bien assemblées de sorte qu'il existe des risques d'inclusion d'air au niveau de la fente créée entre les deux surfaces latérales. Or les inclusions d'air au niveau du revêtement en élastomère de l'isolateur doivent être absolument évitées en raison du risque de décharges incandescentes. Par ailleurs, un excès de colle sur les surfaces latérales entraîne des bavures sur la surface extérieure du revêtement élastomère qu'il est difficile d'éliminer par brossage ou autre. En outre, il subsiste toujours au niveau de la surface extérieure du revêtement élastomère des aspérités en raison de la présence d'un joint entre les ailettes annulaires du fait que la fente créée entre les surfaces latérales est remplie de colle. De telles aspérités constituent des pièges pour les particules polluantes, notamment les poussières dues aux rejets industriels. Ces poussières auront tendance à s'accumuler pour former une couche de matière non isolante. Quand cette couche de matière sera humidifiée (par la pluie de rosée, les embruns marins, etc...), elle constituera une résistance continue de surface qui court-circuitera la ligne de fuite normale de l'isolateur ce qui est préjudiciable aux qualités d'isolation recherchées pour un tel isolateur.

Le but de l'invention est de remédier à ces inconvénients. En particulier, un but de l'invention est de proposer un procédé de fabrication d'un isolateur électrique dont le revêtement en élastomère présente une surface relativement lisse, c'est-à-dire sans joint entre les ailettes annulaires de l'isolateur.

Un autre but de l'invention est de proposer un procédé de fabrication d'un tel isolateur par lequel on obtient une bonne adhérence de la bande profilée en matière élastomère sur le support de l'isolateur de façon à éviter les risques d'inclusion d'air.

Un autre but de l'invention est de proposer un procédé de fabrication d'un tel isolateur électrique à partir d'une bande en élastomère profilée par extrusion et dont la face supérieure est munie de plusieurs ailettes s'étendant transversalement à la surface de base de la bande. En particulier, il s'agit de fabriquer un isolateur électrique comportant des ailettes annulaires ayant des dimensions différentes à l'instar des isolateurs traditionnels en porcelaine comportant des ailettes de grande dimension alternées avec des ailettes de plus petite dimension.

Selon l'invention, on fabrique donc un isolateur électrique à partir d'un support en matériau stratifié et d'une bande continue en matière élastomère qui est enroulée en plusieurs spires successives jointives autour du support sur une face extérieure de celui-ci pour constituer un revêtement isolant sous la forme d'une pluralité d'ailettes annulaires. La bande continue est profilée de façon à présenter en section une surface de base servant de surface de contact avec la surface extérieure du support, une face supérieure munie d'au moins une ailette s'étendant transversalement à la surface de base, une première et une seconde surface latérale qui prolongent la surface de base en faisant un certain angle avec celle-ci. On amène la première surface latérale de la bande directement en contact par superposition avec la seconde surface latérale de la bande lors de l'enroulement en spires de la bande en laissant le matériau élastomère sous sa forme crue au niveau de la première et la seconde surface latérale et on exerce une pression en direction du support sur au moins une partie de la face supérieure de la bande en suivant une fente créée entre la première surface et la seconde surface latérale pour assembler ces deux surfaces.

D'autres caractéristiques et avantages de l'invention apparaîtront encore à la lecture de la description qui suit d'un exemple de réalisation de l'invention.

La figure 1 illustre le procédé de fabrication d'un isolateur électrique selon l'invention.

La figure 2 montre une succession de spires, vues en coupe, et le galet de roulage utilisé lors de la fabrication de l'isolateur électrique.

La figure 3 montre une bande vue en coupe dont la face supérieure est munie de plusieurs ailettes.

La figure 4 montre une bande vue en coupe dont la face supérieure est munie d'une ailette pourvue de deux nervures.

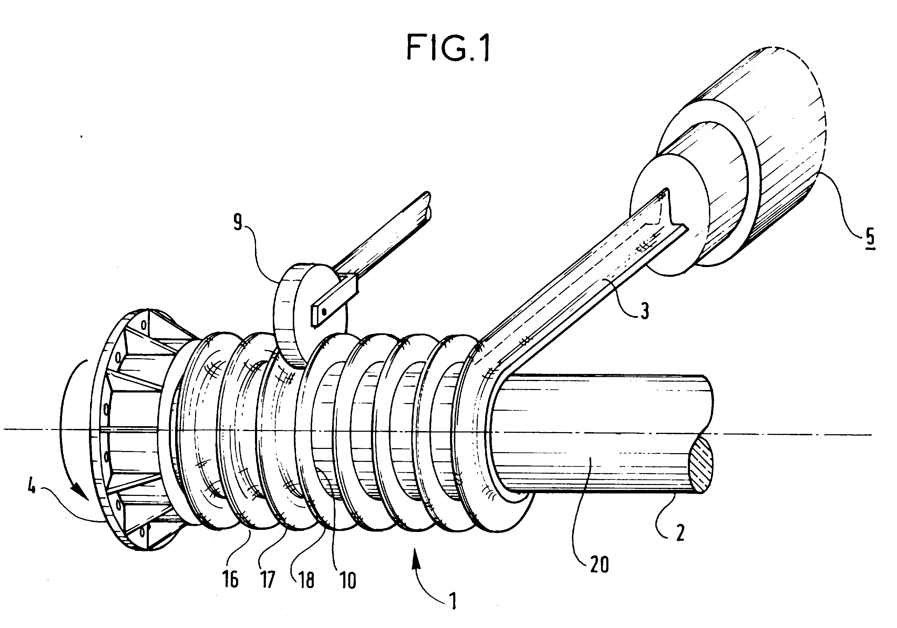

Figure 1, l'isolateur électrique 1 est fabriqué à partir d'un support rigide 2 servant d'armature isolante et d'une bande continue 3 en une matière élastomère enroulée en hélice autour du support pour constituer un revêtement isolant se présentant sous la forme d'une pluralité d'ailettes annulaires.

Le support 2 est réalisé en un matériau stratifié, par exemple, par enroulement de fibres de verres agglomérées avec une résine synthétique, comme une résine époxyde. Ici, le support 2 a une surface extérieure 20 qui est cylindrique mais d'autre formes de révolution sont envisageables. Le support est muni à chacune de ses deux extrémités (une seule est montrée sur la figure) d'une ferrure telle que 4 qui sert d'élément d'ancrage pour l'isolateur.

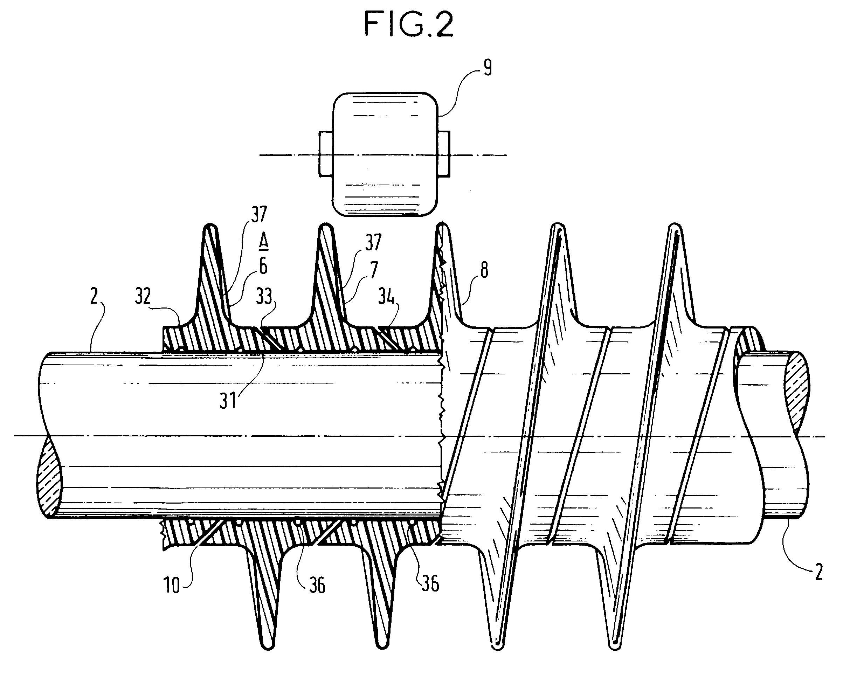

La bande continue 3 est obtenue par extrusion en 5 d'une matière élastomère, comme du silicone, du caoutchouc éthylène-propylène ou analogue. L'extrusion permet de profiler la bande 3. En particulier, figures 1 et 2, la bande 3 présente en section une face supérieure 32 munie d'une ailette 37 qui s'étend transversalement, avec un certain angle, par rapport à une surface de base 31 de la bande. La surface de base 31 sert de surface de contact avec la face extérieure 20 du support. La bande présente aussi en section une première 33 et une seconde 34 surface latérale qui prolongent la surface de base 31 en faisant un certain angle avec celle-ci. A noter que les surfaces latérales 33 et 34 sont de préférence inclinées suivant un angle identique d'environ 45° par rapport à la surface de base 31 de telle façon que ces deux surfaces puissent se superposer au moment de l'enroulement en spires de la bande comme indiqué ci-après.

Selon l'invention, la bande profilée 3 est enroulée en hélice autour du support 2 par application de sa surface de base 31 sur la surface extérieure 20 du support (y compris autour d'une partie de la surface extérieure de chaque ferrure). En particulier, en même temps que la bande 3 est extrudée, on l'enroule en plusieurs spires successives jointives 6,7,8 autour du support qui est entraîné en rotation autour de son axe longitudinal D et qui est déplacé latéralement suivant cet axe D de telle façon à constituer des ailettes annulaires 16,17,18 qui saillent à partir du support. Au fur et à mesure de l'enroulement en spires de la bande, on amène la première surface latérale 33 directement en contact par superposition avec la seconde surface latérale 34 de la bande et il se crée entre ces deux surfaces latérales une fente 10 qui s'enroule en hélice autour de l'axe D du support 2. Pendant l'enroulement en hélice de la bande, on laisse la matière élastomère des deux surfaces latérales 33 et 34 sous sa forme crue, c'est-à-dire qu'on n'enduit pas ces deux surfaces d'une couche de colle ou autre agent adhésif contrairement à l'enseignement du document cité ci-dessus.

A noter que le pas de déplacement du support 2 suivant son axe D et la vitesse de rotation de celui-ci autour de son axe sont réglés de manière que la première surface latérale 33 recouvre uniformément la seconde surface latérale 34 sans chevauchement ou décalage des spires.

Pendant l'enroulement en hélice de la bande 3 autour du support 2, on exerce une pression dirigée vers le support sur la partie de la face supérieure 32 de la bande 3 qui longe la fente hélicoïdale 10 pour assembler les deux surfaces latérales 33 et 34 par mélange de la matière élastomère de la bande. Cette pression est exercée de préférence par roulage avec un galet tel que 9 qui suit donc un trajet hélicoïdal autour du support 2. Le roulage par un galet permet d'éliminer la présence d'un joint au niveau de la fente 10. En plus, le roulage contribue à l'obtention d'une bonne adhérence de la surface de base 31 de la bande sur la surface extérieure 20 du support.

Selon l'invention, la bande 3 a une surface de base 31 pourvue d'une ou plusieurs rainures longitudinales 36 qui servent à l'évacuation de l'air tout au long de l'opération de roulage de sorte à éviter les inclusions d'air entre le revêtement élastomère et le support. Cette évacuation d'air est d'autant plus efficace que le roulage s'exerce au plus proche de la dernière spire constituée autour du support, c'est-à-dire pendant l'enroulement en spires de la bande 3.

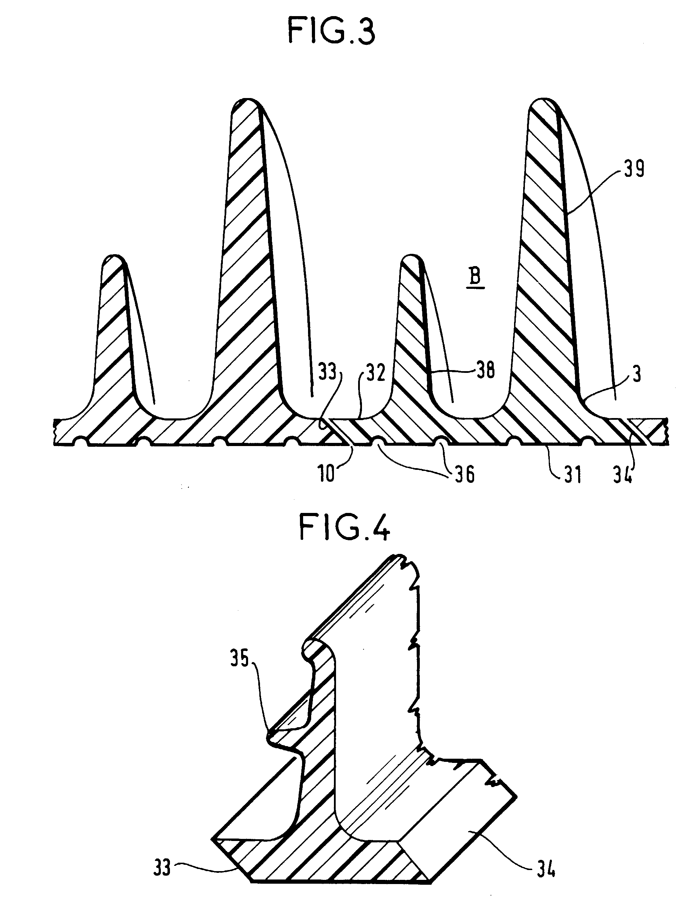

Sur la figure 2, la face supérieure 32 de la bande 3 est munie d'une seule ailette 37 qui peut comporter en plus une ou plusieurs nervures comme visible figure 4 qui sont venues par extrusion. En particulier à la figure 4, l'ailette comporte une nervure inférieure 35 qui sert à augmenter la ligne de fuite de l'isolateur sans augmenter le diamètre extérieur de celui-ci (diamètre des ailettes annulaires). Cette ailette comporte aussi à son extrémité une protubérance dite "goutte d'eau" qui sert à favoriser le ruissellement de l'eau le long de l'isolateur. A noter que le principe de fabrication d'un revêtement d'isolateur en matière élastomère par injection sur un support (tube ou jonc) ne permet pas d'obtenir ce genre de profilé d'isolation avec des nervures. Dans le cas des isolateurs en porcelaine, les nervures doivent être usinées ce qui rend ce procédé plus compliqué que celui de l'invention. Après enroulement de la bande 3 autour du support, on obtient un isolateur tel que représenté figure 1. Mais le procédé selon l'invention permet de fabriquer un isolateur ayant un autre profil extérieur que celui de la figure 1. En particulier, à partir d'une bande 3 présentant en section une face supérieure munie de plusieurs ailettes, par exemple deux ailettes 38,39 ayant en plus des dimensions différentes suivant une direction transversale à la surface de base 31 comme montré figure 3, on obtient un isolateur électrique comportant des ailettes annulaires de grande dimension alternées avec des ailettes annulaires de plus petite dimension. A noter qu'un profil de bande multi-ailettes entraîne un accroissement de la largeur de la bande par rapport à un profil mono-ailette. Pour éviter les risques d'inclusion d'air au moment de l'application de la surface de base 31 de la bande sur la surface extérieure 20 du support, on exerce aussi une pression, par roulage avec un galet tel que 9, sur la partie de la face supérieure de la bande qui se situe entre deux ailettes consécutives de cette bande (ou deux ailettes consécutives de la même spire). A noter encore que le roulage sur les différentes parties de la face supérieure de la bande est réalisé de préférence par un système à plusieurs galets coaxiaux agissant sur des zones différentes de la face supérieure de la bande.

A noter que le galet 9, figure 2, est plus large (suivant une direction axiale) que l'espace (sur la face supérieure 32) laissé libre entre deux ailettes consécutives où il agit par roulage. Ces ailettes peuvent faire partie de spires différentes comme pour l'espace A sur la figure 2 ou faire partie de la même spire comme pour l'espace B sur la figure 3. En pressant un tel galet entre deux ailettes, on plaque aussi la partie de la bande situé sous chaque ailette ce qui contribue à éviter les problèmes d'inclusion d'air à cet endroit de la bande. Par ailleurs, comme visible sur les figures 2 et 3, les rainures 36 sont situées de part et d'autre d'une ailette 37 de façon à pouvoir être écrasées par le galet 9 lors du roulage.

Après que la bande ait été enroulée autour du support et appliquée contre la surface extérieure de celui-ci par roulage comme indiqué ci-dessus, l'ensemble est placé dans une étuve pour vulcaniser la matière élastomère. A noter que durant cette opération de vulcanisation, il est préférable de maintenir le support en rotation autour de son axe D de façon à éviter une déformation des ailettes annulaires.

## Revendications

1. Un procédé de fabrication d'un isolateur électrique (1) à partir d'un support (2) en matériau stratifié et d'une bande continue (3) en matière élastomère qui est enroulée en plusieurs spires (6,7,8) successives jointives autour du support sur une surface (20) extérieure de celui-ci pour constituer un revêtement isolant sous la forme d'une pluralité d'ailettes annulaires (16,17,18), la bande continue étant profilée de façon à présenter en section une surface de base (31) servant de surface de contact avec la surface extérieure du support, une face supérieure (32) munie d'au moins une ailette s'étendant transversalement à la surface de base, une première (33) et une seconde (34) surface latérale qui prolongent la surface de base en faisant un certain angle avec celle-ci, caractérisé par le fait qu'on amène la première surface latérale (33) de la bande (3) directement en contact par superposition avec la seconde surface latérale (34) de la bande lors de l'enroulement en spires de la bande en laissant la matière élastomère sous sa forme crue au niveau de la première et la seconde surface latérale, et par le fait que le joint entre la première et la seconde surface latérale de la bande est éliminé en exerçant une pression en direction du support sur au moins une partie de la face supérieure de la bande, après quoi la matière élastomère de la bande enroulée en spires est vulcanisée.

2. Le procédé selon la revendication 1, dans lequel on exerce ladite pression par roulage au fur et à mesure de l'enroulement de la bande (3) autour du support (2).

3. Le procédé selon la revendication 1 ou 2, dans lequel on exerce ladite pression avec un galet de roulage (9) qui est plus large que l'espace laissé libre entre deux ailettes (16,17) consécutives de spires différentes (6,7).

4. Le procédé selon l'une des revendications 1 à 3, dans lequel on utilise comme bande profilée une bande (3) dont la surface de base (31) est munie d'au moins une rainure longitudinale (36).

5. Le procédé selon la revendication 4, dans lequel on utilise comme bande profilée une bande dont la face supérieure (32) est munie d'au moins deux ailettes (38,39).

6. Le procédé selon la revendication 5, dans lequel on utilise comme bande profilée une bande dont la face supérieure est munie d'au moins deux ailettes ayant des dimensions différentes suivant une direction perpendiculaire à la surface de base de la bande.

7. Le procédé selon la revendication 5 ou 6, dans lequel on exerce ladite pression, y compris sur une partie de face supérieure comprise entre deux ailettes consécutives de la bande.

## Patentansprüche

1. Verfahren zur Herstellung eines elektrischen Isolators (1) ausgehend von einem Träger (2) aus Verbundmaterial und einem kontinuierlichen Band (3) aus Elastomermaterial, das in mehreren aufeinanderfolgenden und aneinander anliegenden Windungen (6, 7, 8) auf eine äußere Oberfläche (20) des Trägers aufgewickelt ist, um eine isolierende Umhüllung in Form einer Mehrzahl von ringförmigen Rippen (16, 17, 18) zu bilden, wobei das kontinuierliche Band eine solche Profilform hat, daß es im Querschnitt eine Basisseite (31), die als Kontaktfläche mit der äußeren Oberfläche des Trägers dient, eine Oberseite (32), die mindestens eine sich quer zur Basisseite erstreckende Rippe besitzt, eine erste (33) und eine zweite Seitenfläche (34) aufweist, die die Basisseite verlängern und mit dieser einen bestimmten Winkel einschließen, dadurch gekennzeichnet, daß man die erste Seitenfläche (33) des Bands (3) unmittelbar mit der zweiten Seitenfläche (34) des Bands beim spiralförmigen Wickeln des Bands durch Überlagerung in Kontakt bringt, wobei das Elastomermaterial in Höhe der ersten und der zweiten Seitenfläche in seiner Rohform bleibt, und daß die Fuge zwischen der ersten und der zweiten Seitenfläche des Band eliminiert wird, indem ein Druck in Richtung auf den Träger in mindestens einem Teilbereich der Oberseite des Bands ausgeübt wird, worauf das Elastomermaterial des spiralförmig aufgewickelten Bands vulkanisiert wird.

2. Verfahren nach Anspruch 1, bei dem der Druck durch Wwalzen während des Aufwickelns des Bands (3) um den Träger (2) ausgeübt wird.

3. Verfahren nach Anspruch 1 oder 2, bei dem der Druck mit einer Walzrolle (9) ausgeübt wird, die breiter ist als der Freiraum zwischen zwei aufeinanderfolgenden Rippen (16, 17) unterschiedlicher Windungen (6, 7).

4. Verfahren nach einem der Ansprüche 1 bis 3, bei dem man als Profilband ein Band (3) verwendet, dessen Basisseite (31) mindestens eine Längsrinne (36) aufweist.

5. Verfahren nach Anspruch 4, bei dem man als Profilband ein Band verwendet, dessen Oberseite (32) mindestens zwei Rippen (38, 39) aufweist.

6. Verfahren nach Anspruch 5, bei dem man als Profilband ein Band verwendet, dessen Oberseite mindestens zwei Rippen unterschiedlicher Abmessungen in Richtung senkrecht zur Basisseite des Bands aufweist.

7. Verfahren nach Anspruch 5 oder 6, bei dem man auch einen Druck auf einen Bereich der Bandoberseite zwischen zwei aufeinanderfolgenden Rippen des Bandes ausübt.

## Claims

1. A method of manufacturing an electrical insulator (1) from a support (2) of stratified material and a continuous strip (3) of elastomer material which is wound in a plurality of successive touching turns (6, 7, 8) around the support on an outside surface thereof to constitute an insulating covering in the form of a plurality of annular fins (16, 17, 18), the continuous strip being shaped to present in section a base surface (31) serving as a contact surface with the outside surface of the support, a top face (32) provided with at least one fin extending transversely to the base surface, and first and second side surfaces (33, 34) which extend the base surface and make a certain angle therewith, characterized by the facts that the first side surface (33) of the strip (3) is brought directly into contact by superposition with the second side surface (34) of the strip while the strip is being wound in turns, leaving elastomer material in raw form at the first and second side surfaces, and that the joint between the first and second side surfaces of the strip is eliminated by exerting pressure towards the support over at least a portion of the top face of the strip, after which the elastomer material of the strip wound into turns is vulcanized.

2. The method according to claim 1, in which said pressure is exerted by rolling as the strip (3) is wound around the support (2).

3. The method according to claim 1 or 2, in which said pressure is exerted with a rolling wheel (9) which is wider than the space left empty between two consecutive fins (16, 17) of different turns (6, 7).

4. The method according to any one of claims 1 to 3, in which the shaped strip used is a strip (3) whose base surface (31) is provided with at least one longitudinal groove (36).

5. The method according to claim 4, in which the shaped strip used is a strip whose top face (32) is provided with at least two fins (38, 39).

6. The method according to claim 5, in which the shaped strip used is a strip whose top face is provided with at least two fins having different dimensions in a direction perpendicular to the base surface of the strip.

7. The method according to claim 5 or 6, in which said pressure is exerted including over a portion of the top face extending between two consecutive fins of the strip.
